# EUROPEAN PATENT SPECIFICATION

(11) **EP 2 099 307 B1**
(45) Date of publication and mention of the grant of the patent: **13.04.2011**
(21) Application number: 08705088.6
(22) Date of filing: 10.01.2008
(51) Int. Cl.: A22B 5/00, A22C 21/06

(54) **DEVICE FOR CUTTING OUT THE VENT OF SLAUGHTERED POULTRY**
VORRICHTUNG ZUR ENTFERNUNG DER GESCHLECHTSÖFFNUNG VON GESCHLACHTETEM GEFLÜGEL
DISPOSITIF PERMETTANT DE SECTIONNER LE CLOAQUE DE VOLAILLES ABATTUES

(30) Priority: 10.01.2007 NL 1033199
(43) Date of publication of application: 16.09.2009
(73) Proprietor: Systemate Group B.V., 3281 NC Numansdorp (NL)
(72) Inventor: SLAGBOOM, Rijk, NL-3295 TG 's-Gravendeel (NL); STOOKER, Dirk Cornelis, 3297 DA Puttershoek (NL)
(74) Representative: Geurts, Franciscus Antonius
(86) International application number: PCT/NL2008/050019
(87) International publication number: WO 2008/085049

(56) References cited:
- EP-A- 0 460 740
- EP-A- 0 843 971
- EP-A- 1 588 622
- WO-A-96/09770
- GB-A- 2 147 190

## Description

### BACKGROUND OF THE INVENTION

The invention relates to a device and a method for removing the vent of a carcass of slaughtered poultry.

In the European patent 0, 843, 971 a so-called vent cutter is shown, comprising a centering pin, that is provided with an external thread, that is inserted in the vent opening of a carcass to center the vent area and lift the orbicular muscle somewhat for tensioning the vent area. The centering pin is surrounded by a cylinder knife, that is moved downward with respect to the centering pin until it is in cutting engagement with the vent area and is rotated to cut the vent area loose. The centering pin with external thread is used after cutting the vent area loose to lift away that area with the connected rectum from the carcass, wherein the orbicular muscle is held between the centering pin and the cylinder knife. By subsequently rotating the centering pin back the vent area and rectum are released, so as to arrive at the exterior of the carcass.

A drawback of this device is that the thread may damage the rectum, because of which its contents may be released and may contaminate or infest the carcass.

A device that has been improved in this respect has been described in the European patent application 1.588.622 in which the centering pin has been provided with a ring of deformable material that by forcing toward each other two pin sections which are located at either side of the ring, or by means of compressed air can be radially expanded to force the rectum against the cylinder knife. A drawback of this is that in the long run the body materials of, the carcass may affect the material of the ring, because of which the ring has to be replaced.

An imperfection of the two above-mentioned known devices is that damage of the vent area may occur when the cylinder knife and the centering pin are directed eccentrically with respect to the vent opening. The damage may result in contamination of the surrounding carcass area.

Britisch patent application 2.147.190 discloses a vent cutter and a method in accordance with the preamble of claims 1 and 13. The disclosed vent cutter comprises a cylinder knife and a centering pin having a rectum probe that is moveable into the cylinder knife in the axial direction of the cilinder knife and the centering pin. European patent application 0.460.740 discloses a similar vent cutter

It is an object of the invention to provide a device and method of the type as mentioned in the preamble, with which the vent area and/or adjacent rectum area can be clamped between the centering pin and the cylinder knife in a reliable manner.

It is an object of the invention to provide a device and method of the type as mentioned in the preamble, with which the vent area and/or adjacent rectum area can be clamped between the centering pin and the cylinder knife with less risk of damage.

It is an object of the invention to provide a device and method of the type as mentioned in the preamble, with which the vent area and/or adjacent rectum area can be clamped between the centering pin and the cylinder knife, and with which that operation can be guaranteed also in the long run.

It is an object of the invention to provide a device and method of the type as mentioned in the preamble, with which the chance of tearing and damage of the vent area is reduced.

### SUMMARY OF THE INVENTION

From one aspect the present invention provides, in order to achieve at least one of the above-mentioned objects, a device according to claim 1.

In one embodiment the pin end section is movable toward and away from the cylinder knife.

In one embodiment the device is adapted for moving toward each other, by a relative displacement between the cylinder knife and the pin end section, the inner surface of the cylinder knife and the clamping surface to clamp an intestinal section there between.

In an embodiment the pin body has a central axis and the pin end section is movable with respect to the central axis of the pin body between a starting position in line with the central axis and an operational position at an angle with it.

In this way it is achieved that the pin end section with the end section can be searching when entering the vent opening. If necessary the vent opening then upon further penetration of the centering pin may be gradually moved toward a position that is centered with respect to the cylinder knife, because of which early damage of the vent area is prevented.

Because of this a condition has also been provided for a function that is to be performed later, of clamping the rectum between the cylinder knife and the pin end section, which will be further elucidated hereinafter.

In one embodiment the pin end section is spring-biased toward the starting position, so that the pin end section finally returns to a position that is concentric with the cylinder knife.

The pin end section can be pivotally connected to the rest of the pin body, for instance at the location of a pivot line. There the pivot line can be situated eccentrically with respect to the central axis of the pin body, because of which moment action for rotation of the pin end section can be enhanced.

The thus movable pin end section can be utilised for the phase of removing the vent area with connected gut section, for which purpose the device is provided with means for forcing the pin end section to the operational position and keeping it there.

In this way a clamping force can be provided with simple means which are also operating well in the long run. Because as a consequence of the mutual inclined position clamping is only local, a clamping force of sufficient magnitude can easily be realised. Here damage of the clamped areas is largely avoided. Furthermore because of the attainable inclined position a clamping action can be realised in several diameter combinations of the centering pin and cylinder knife. A centering pin may thus for instance be combined with cylinder knifes of several diameters: the centering pin can be left on the machine (usually a carrousel) and a series of cylinder knifes can be replaced by cylinder knifes with a larger or smaller diameter, if in a next process cycle carcasses of other sizes have to be processed.

In a further embodiment the device according to the invention is adapted for bringing the pin end section in the operational position by a relative displacement between the cylinder knife and the pin end section in the direction of the central axis of the cylinder knife. There in a further embodiment means, such as a spacer-abutment ring, can be provided for adjusting the location of the start of the operational condition of the pusher means.

In one embodiment the device according to the invention is provided with means for adjusting the clamping force.

In one embodiment the means for forcing the pin end section to the operational position comprise a first actuator member, carried by the cylinder knife, that is arranged for directly or indirectly exerting on the pin end section a force that forces the pin end section toward the operational position, preferably a pushing force.

There the pin end section can be provided with an abutment that is arranged for direct or indirect engagement by the first actuator member.

When on the pin body then a second actuator member is present that is movable along it, that is arranged for a force transmitting connection between the first actuator member and the abutment, the first actuator member can be positioned axially spaced from the abutment on the movable pin end section.

The second actuator member can form a sleeve that is placed on the pin body in a slidable manner.

In the above-mentioned embodiment with pivotal central axis the abutment can be operational at a side of the central axis of the pin opposite the pivot line.

In an embodiment the cylinder knife has a cylinder axis and the pin end section is movable with respect to the cylinder axis between a starting position in line with the cylinder axis and an operational position at an angle with it.

In one embodiment thereof the device is adapted for bringing the pin end section in the operational position by a relative displacement between the cylinder knife and the pin end section in the direction of the cylinder axis.

In an embodiment the pin end section has a central axis for the pin end section and the cylinder knife has a cylinder axis, wherein the device furthermore comprises means for mutually rotating the central axis of the pin end section and the cylinder axis between a starting position parallel, and in particular concentric with respect to each other and an intestinal clamping position, at an angle with respect to each other.

In one embodiment the pin end section is movable toward and away from the cylinder knife.

In one embodiment the device is adapted for bringing the pin end section in the operational position by a relative displacement between the cylinder knife and the pin end section in the direction of the cylinder axis.

From a further aspect the invention provides a method according to claim 13.

In one embodiment the pin end section is moved for clamping the intestinal. There the pin end section can be placed inclined.

### SHORT DESCRIPTION OF THE DRAWINGS

The invention will be elucidated on the basis of a number of exemplary embodiments as shown in the attached drawings, in which:

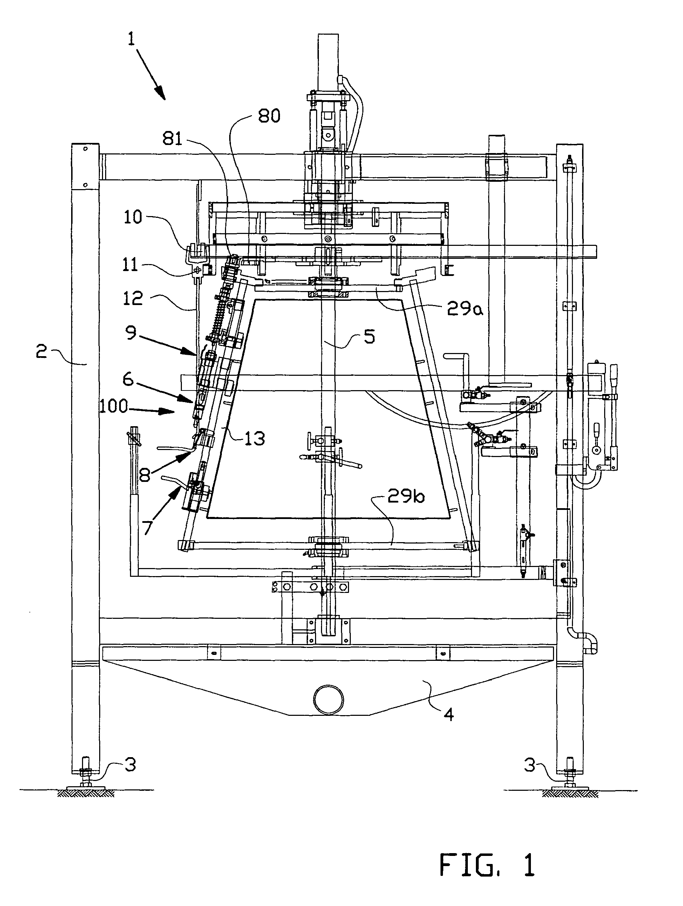

figure 1 is a schematic vertical cross-section through an exemplary embodiment of a device according to the invention;
figures 2, 2A respectively, are a side view of a unit for use in the device of figure 1, and a detail of it;
figures 3, 3A respectively, are a front view and a detail of the unit of figures 2 and 2A;
figures 4A and 4B are a side view, a front view respectively, of a centering pin for the embodiment of the unit according to the preceding figures; and
figures 5A-G are consecutive stages of the use of the device according to figure 1.

### DETAILED DESCRIPTION OF THE DRAWINGS

The device 1 is a device for cutting out and removing the vent and connected rectum section of slaughtered poultry, so that in a next processing station the slaughtered poultry can be subjected to the process of cutting open further and thereupon taking the intestines out.

The device 1 comprises a frame 2 that is placed on a foundation with legs 3. In the frame 2 a vertical shaft 5 has been arranged that is rotated with means which have not been further depicted, and onto which an upper wheel 29a and a lower wheel 29b have been secured, wherein at the wheels 29a, 29b a circumferentially distributed series of vent bore units 6 have been arranged, in order to form a carrousel 100. At the bottom a collection hopper 4 has been arranged on the frame 2.

The frame 2 further supports a guide 10 for trolleys or suspension means 11 of an overhead conveyor that is propelled with means which have not been further depicted. The trolleys 11 comprise a bar 12, at the lower end of which leg braces are provided which are known per se, for the carcass in the upside down position.

On the frame 2 furthermore teeth 81 have been provided, the function of which will be discussed in more detail.

Each unit 6 comprises a carcass support 7 and leg braces 8, as well as a centering/bore unit 9.

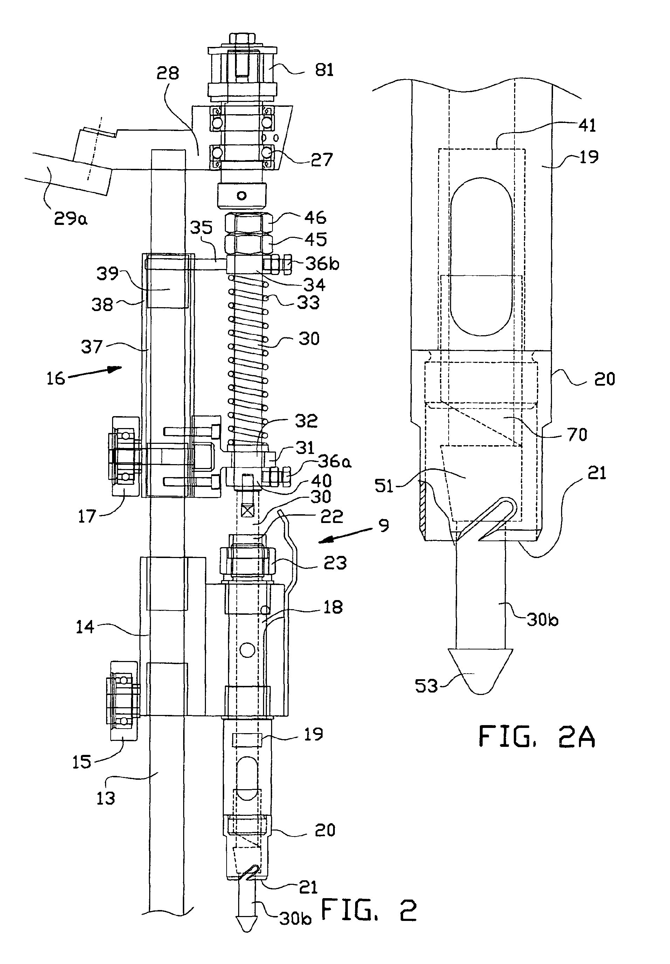

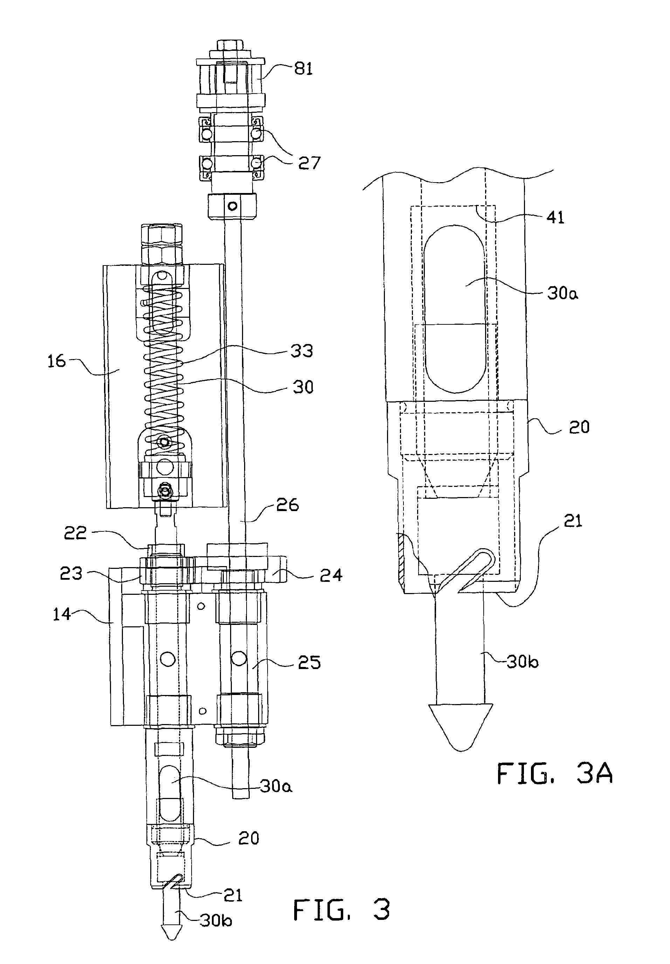

The carcass support 7 has been mounted on guide bars 13 in an upward and downward movable manner. The leg brace 8 has been resiliently arranged thereon. As can be seen in figures 2 and 3 the centering/knife unit 9 comprises to components 14, 16 which are slidable upward and downward along the guide bars 13, one of which is intended for actuation of the knife and one is intended for actuation of a centering pin 30.

The holder 14 for the knife 20 is provided with a freely rotatable roller 15, in order to be displaced up and down in that suitable manner during the cycle of the carrousel 100, by means of a curve path that is accommodated in the frame 2. The knife is formed by a right circle cylindrically shaped knife 20, with a cutting edge 21. The cylinder knife 20 is secured onto a hollow bar 19, that extends into the holder 14 through a bore 18, and at its top it is provided with a pinion 23. As can be seen in figure 3 the pinion 23 cooperates with a pinion 24, that has been fixed on a vertical pin that extends through the bore 25 into the holder 14. At the upper end at the location of 27 the bar 26 is bearing supported in the holder 28, that is fixedly secured on the upper plate 29a. On the bar 26, above the bearing 27 a basket 81 is provided that is provided with pins, wherein the pins can engage the above-mentioned fixedly arranged rack 80.

When considered vertically the bar 26 remains in its position. For permanent engagement onto the pinion 24 the bar 26 has a square cross-section, while the pinion has a matching square cross-section for sliding passage of the bar 26 through it, while maintaining the transmission.

The cooperation between the basket 81 and rack 80 serves to enable rotation of the cylinder knife 20 when a cutting operation is required.

The holder 16, destined for the centering pin 30 that will be discussed in more detail, is also provided with a freely travelling roller 17, for cooperation with a curve path that is arranged in a fixed manner in the frame 2, and that has not been depicted, in order to make the centering pin undergo the required vertical displacement. In the center, by means of an adjusting bolt 36a, an abutment block 40 is secured to the centering pin 30 in a fixed though adjustable manner. The abutment block 40 arrives against jib 31, that is formed integrally with the holder 16. The jib 31 is provided with a passage 32 for the upper section of the centering pin 30. The jib 31 forms a support surface of a compression spring 33, that is located around the pin 30. The upper end of the spring 33 supports against the abutment block 34, that is secured on the centering pin 30 by means of adjusting bolt 36b in a fixed manner, but adjustable as regards its position. The abutment block 34 is provided with a pin 35 that extends into a vertical guide slot 39 that is provided in the upper section of the holder 16 to prevent the pin 30 from rotating. At the top of the centering pin 30 an adjusting nut 45 and a lock nut 46 have been provided.

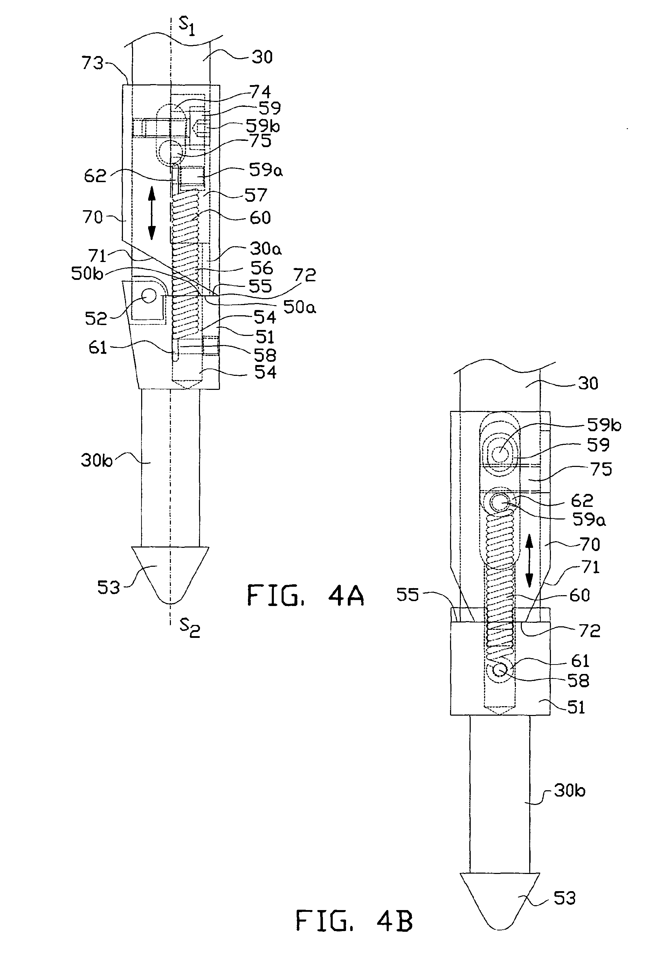

The lower end of the centering pin is being depicted in detail in figures 4A and 4B, while leaving out the cylinder knife 20. It can be noticed that the centering pin 30 is divided, wherein at the lower end of pin section 30a at the location of the horizontal hinge pin 52 a pin end section 30b is secured, said end section 30b being provided with a thickened, conical tip 53. At the upper end, facing away from the tip 53, of the end section 30b a collar 51 with a stop edge 55 is formed, in which a vertical bore 54 is provided, that opens in the plane 50a. This bore 57 is in line with a bore 57 in the lower end of the pin section 30a, said bore debouching in the lower plane 50b. In the bore 57 a tension spring 60 is accommodated, that is secured with end eyes 61, 62 respectively, in the extreme ends of the bores 54 and 57. For this purpose a bolt 58 is used for the eye 61 and for the eye 62 a small block 59 is used that is accommodated in an accommodation space in the pin section 30a in a longitudinally slidable manner. The small block 59 is provided with a small pin 59a around which the eye 62 can be placed. The cube is furthermore provided with a screw hole for a bolt 59b with which the cube 59 can be secured to the end section 30a, after the spring 60 has been tensioned by shifting the cube 59 into the accommodation space away from the lower end.

At the lower end of the pin section 30a furthermore a sleeve 70 is arranged, that is slidable within limits along the pin section 30a, and at the lower end it is provided with an inclined edge 71, terminating in an abutment edge 72. At the upper end a circumferential abutment edge 73 is provided. The sleeve 70 is furthermore provided with a slotted hole 74, in which is accommodated a removable finger 75, that is secured statically in the end section 30a of the centering pin 30. The extreme end of the finger 75 engages the small block 59 to lock it in the position as established with the bolt 59b.

It will be understood that when the sleeve 70 is forced downwardly, and performs a displacement, restricted by the slotted hole 74, the abutment edge 72 exerts a downward force on the stop edge 55 of the collar 51. Because of this the end section 30b will rotate about the hinge pin 52, which rotation is not excluded by the spring 60 because it can buckle/bend along in the area between the bores 54 and 57, by which the planes 50a and 50b are being moved away from each other. Because of this the center line S2 of the end section 30b may arrive at an angle of for instance 10° with respect to the center line S1 of the remaining section 30a of the centering pin 30.

Within the hollow bar 19 an abutment edge 41 is provided, against which the upper stop edge 73 of the sleeve 70 can abut. It is possible to use a higher positioned circumferential edge against which an abutment spacer ring that is to be placed in the hollow bar, can be placed, and then the lower edge of said ring forms the stop edge for the sleeve 70. Dependent upon the combination with the knife a more or less high ring can be placed, in order to choose the abutment edge of the sleeve in axial direction.

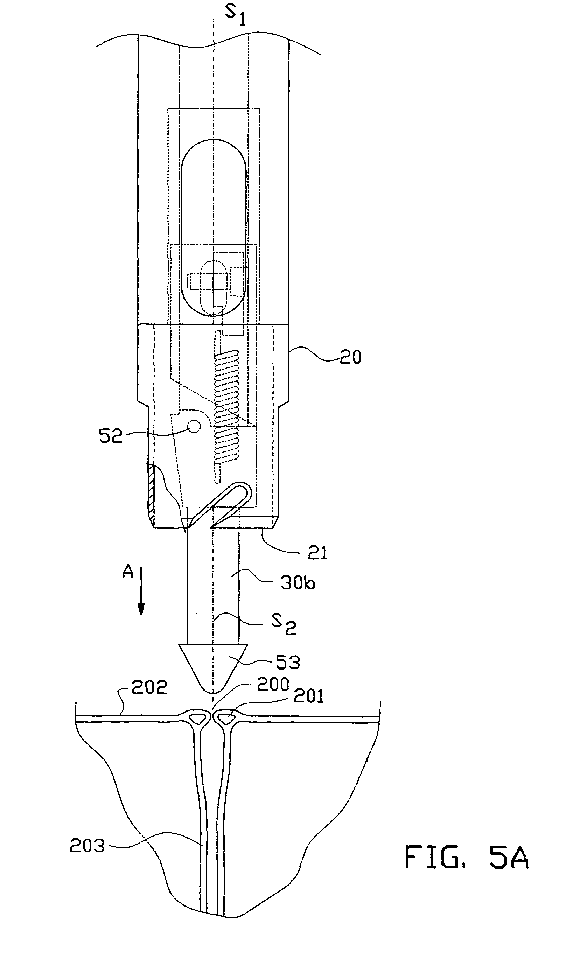

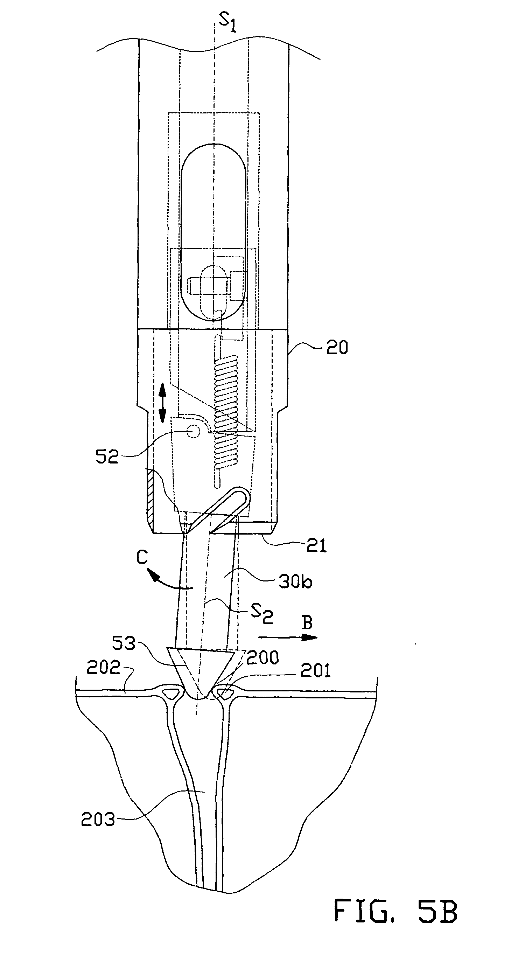

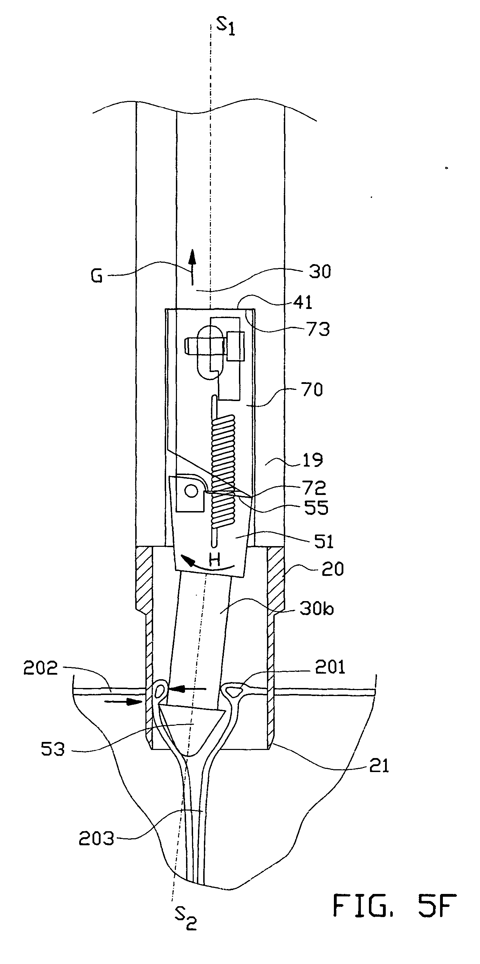

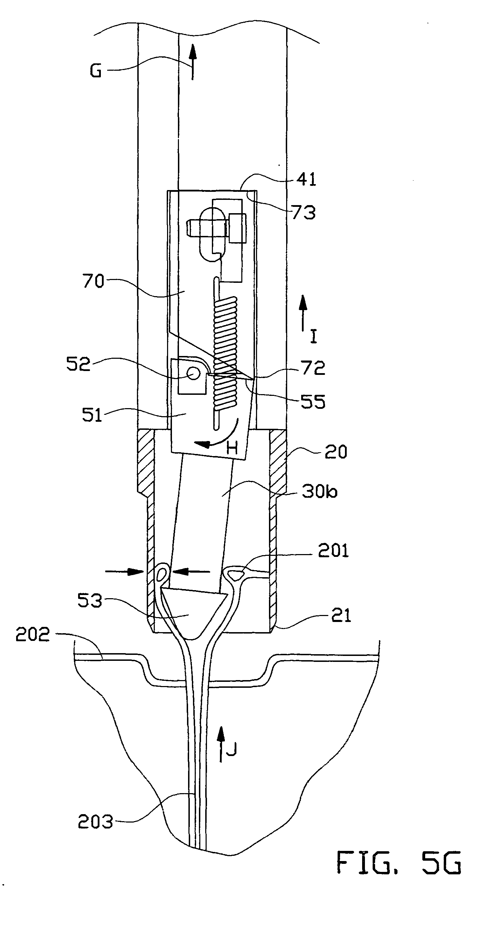

During operation carcasses of poultry are conveyed with the overhead conveyor, each carcass being suspended from a trolley 11, in order to be synchronically supported by the carcass support 7 and the leg brace 8. When a carcass has been thus positioned, with the back or the chest facing the shaft 5, the centering pin 30 is lowered in vertical direction A toward the vent of a carcass by vertical displacement along the guide bars 13 of the holder 16, by arrival of the jib 31 against the abutment block 40. This is being depicted in figure 5A. In figure 5B is being depicted by way of illustration that the vent 200 with the orbicular muscle 201 is not in line with the central axis S1 van the centering pin 30. Furthermore the surface 202 of the carcass and the rectum 203 that is connected to the vent, are being depicted.

When the head 53 of the centering pin 30 hits the orbicular muscle 201, a lateral force (B) can be exerted on the orbicular muscle 201 because of the conical shape. By the resiliently rotatable suspension of the end section 30b it may however also recede in opposite direction C, having the advantage that the large forces which are exerted on the orbicular muscle 201 are avoided, and thereby it can be prevented from being damaged. This has been depicted in figure 5B. The free slidability of the sleeve 70 does not obstruct said tilting movement of the end section 30b.

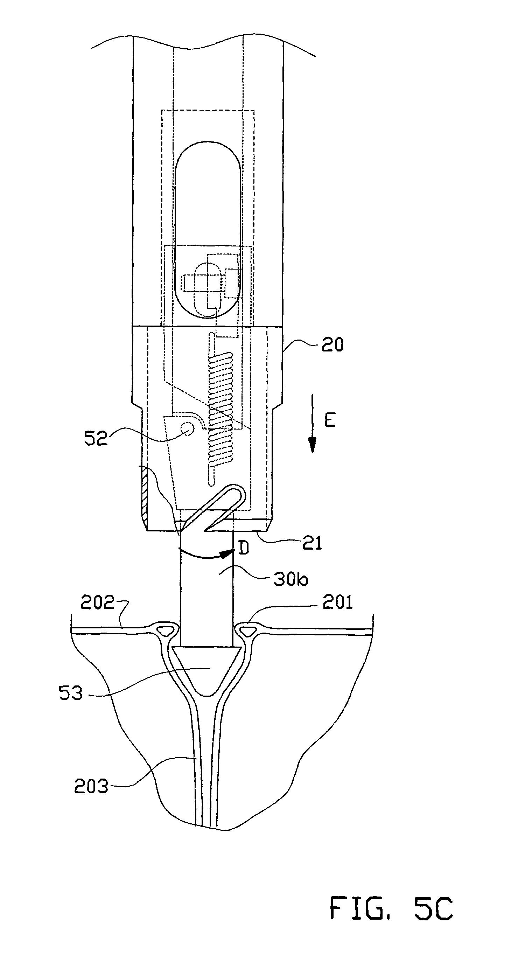

After the head 53 has arrived beyond the orbicular muscle 201, the end section 30b can move back again in the direction D, under the influence of the tensioned spring 60, to a situation in which they are aligned with the rest of the centering pin 30a, depicted in figure 5C.

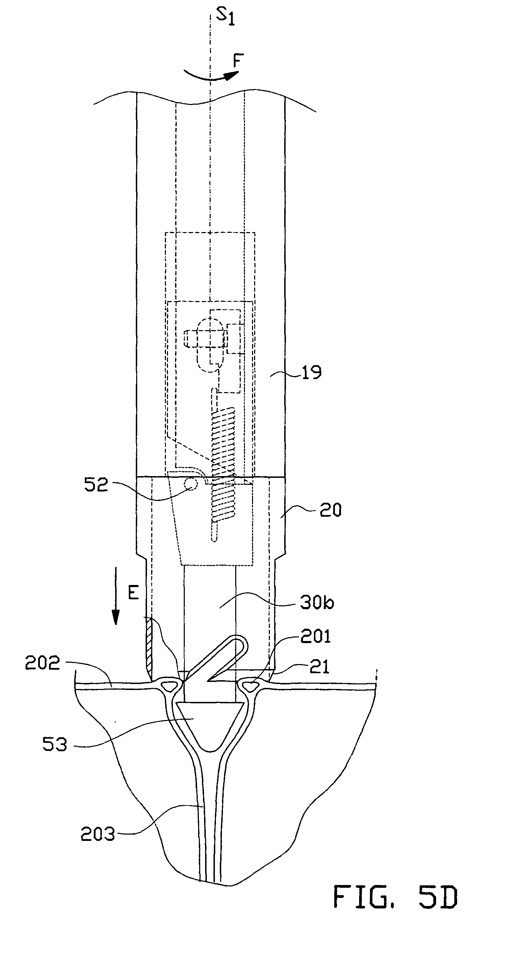

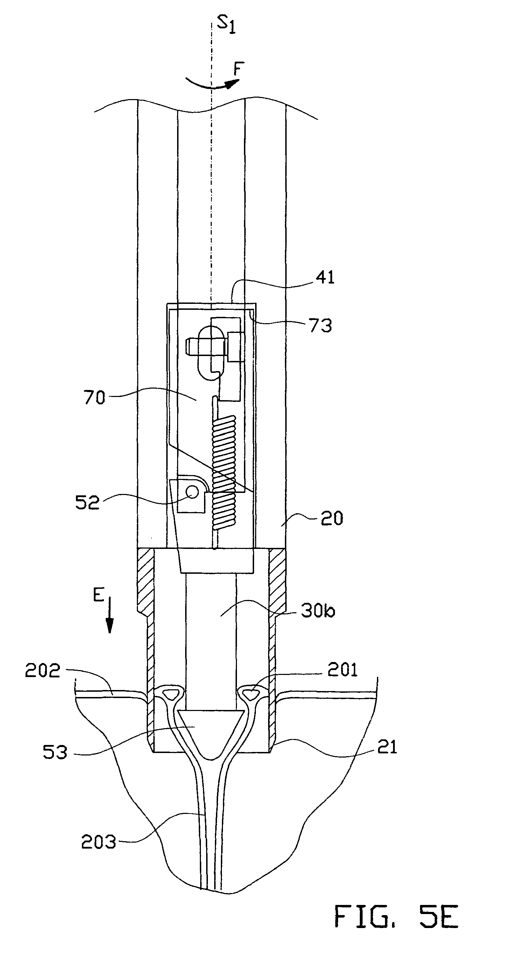

The orbicular muscle 201 and thereby the vent 200, is now centered with respect to the cylinder knife 20, that is forced downward by displacement of the holder 14, sliding along/about the centering pin 30 in direction E. Here the cylinder knife 20 is driven in rotation in direction F by the above described transmission with pinions 23, 24, bar 26, basket 81 and rack 80. As depicted in figure 5D the area around the orbicular muscle 201 is transected by the knife 20 with cutting edge 21, so that the orbicular muscle 201 and connected area disengages from the carcass body 200 as depicted in figure 5E. The rectum 203 is still fastened to the orbicular muscle 201. Then the tip 53 is laterally surrounded by the wall of the cylinder knife 20.

Then the basket 81 and the rack 80 loose their mutual engagement, so that the knife 20 no longer rotates. The pin 30 does not rotate either. Then the holder 16 is forced upward in direction G, along a short distance, by the action of the curve path on the roller 17, wherein the jib 31 pushes the spring 33 upward and the abutment block 34 is forced upward, and thereby the pin 30. Because of this the abutment edge 73 of the sleeve 70 abuts against the abutment edge 41 in the hollow bar 19. There the abutment edge 72 exerts a tilting moment H on the collar 51 of the end section 30b. Because of this said end section 30b will be forced from the unit 6 itself to become inclined with the central axis S2 relative to the central axis S1, in an operational position, wherein the tip 53 is forcefully forced toward the wall of the cylinder knife 20, while clamping the rectum 203 there between. The clamping force that is exerted by the tilted end section 30b depends upon the extent up to which the spring 33 is being compressed.

Then the area of the orbicular muscle 201 and the rectum 203 has been securely fixed to the centering pin/cylinder knife, and the assembly of holders 14 and 16 can be lifted via the curve paths, while entraining the orbicular muscle 201 and rectum 203. When the latter have been led above and adjacent the carcass the holder 16 can be moved downward again with respect to the holder 14, wherein under the influence of the spring 60 the end section 30b is being pulled back to the orientation entirely in line with the rest of the centering pin 30, because of which the planes 50a and 50b are again in a position one against the other, tensioned by the spring 60. Then the orbicular muscle 201 and rectum 203 can fall down freely. This falling can take place easily, because of which there is only little chance that the intestines are being drawn around the machine and optionally cause cross-contamination. Then the unit 6 can complete its cycle in order to start a new cycle again.

Because of the ability of the pin end section 30b to rotate about the pin 52 the rectum 203/orbicular muscle 201 can always be clamped well, both at the cylinder knifes 20 with a small diameter and at the cylinder knifes 20 with a large diameter. When changing to a different size of slaughtered poultry then usually only the cylinder knife 20, and optionally the above-mentioned ring with abutment edge for the sleeve have to be replaced, which can be performed easily by utilising a screw connection at the lower end of the hollow bar 19.

The above description is included to illustrate the operation of preferred embodiments of the invention and not to limit the scope of the invention. Starting from the above explanation many variations that fall within the scope of the present invention will be evident to an expert.

## Claims

1. Device (1) for cutting out and removing the vent (200) of a carcass of slaughtered poultry, comprising a holder (7) for the carcass and an assembly (9) that is movable toward and away from the carcass, with a rotationally driven cylinder knife (20) with a cutting edge (21) and a cylindrical inner surface and a pin (30) extending within the cylinder knife (20), with a pin body (30a) that is provided with a pin end section (30b) with an end section (53) that is destined for passage through the vent opening (200) and for engaging behind the orbicular muscle (201), wherein the pin end section (30b) has a rigid, solid clamping surface, **characterized in that** the device (1) is furthermore provided with means for swingingly moving the pin end section (30b) towards the cylinder knife (20) and thereby moving toward each other, substantially transverse to the cylindrical inner surface, a section of the inner surface of the cylinder knife and a section of the clamping surface within the cylinder knife (20) to locally clamp an intestinal section (203) there between.

2. Device (1) according to claim 1, wherein the pin end section (30b) is movable toward and away from the cylinder knife (20).

3. Device (1) according to claim 1 or 2, adapted for moving toward each other, by a relative displacement between the cylinder knife (20) and the pin end section (30b), the inner surface of the cylinder knife (20) and the clamping surface to clamp an intestinal section (203) there between.

4. Device (1) according to any one of the preceding claims,
wherein the pin body (30a) has a central axis (S₁) and the pin end section (30b) is movable with respect to the central axis (S₁) of the pin body 30a between a starting position in line with the central axis (S₁) and an operational position at an angle (H) with it.

5. Device (1) according to claim 4, wherein the pin end section (30b) is spring-biased toward the starting position.

6. Device (1) according to claim 4 or 5, wherein the pin end section (30b) is pivotally connected to the rest of the pin body (30a), wherein, preferably, the pin end section (30b) at the location of a pivot line (52) is pivotally connected to the rest of the pin body (30a), wherein the pivot line (52) is preferably situated eccentrically with respect to the central axis (S₁) of the pin body (30a).

7. Device (1) according to any one of claims (4-6), provided with means (70) for forcing the pin end section (30b) to the operational position and keeping it there, wherein the device (1) is preferably adapted for bringing the pin end section (30b) in the operational position by a relative displacement between the cylinder knife (20) and the pin end section (30b) in the direction of the central axis of the cylinder knife (S₁), wherein, preferably, means, such as a spacer-abutment ring, have been provided for adjusting the location of the start of the operational condition of the pusher means (70), wherein, preferably, the device is provided with means for adjusting the clamping force.

8. Device (1) according to claim 7, wherein the means (70) for forcing the pin end section (30b) to the operational position comprise a first actuator member, carried by the cylinder knife (20), that is arranged for directly or indirectly exerting on the pin end section (30b) a force that forces the pin end section (30b) toward the operational position, preferably a pushing force, wherein the pin end section (30b) has preferably been provided with an abutment (50a) that is arranged for direct or indirect engagement by the first actuator member, wherein, preferably, on the pin body (30a) a second actuator member (70) has been provided, that is movable along the pin body (30a) for a force transmitting connection between the first actuator member and the abutment (50a), wherein, preferably, the second actuator member (70) forms a sleeve that is placed on the pin body (30a) in a slidable manner.

9. Device (1) according to claim 6 and 8, wherein the abutment (50a) is operational at a side of the central axis of the pin (S₁) opposite the pivot line (52).

10. Device (1) according to any one of the preceding claims, wherein the cylinder knife (20) has a cylinder axis (S₁) and the pin end section (30b) is movable with respect to the cylinder axis (S₁) between a starting position in line with the cylinder axis (S₁) and an operational position at an angle with it, wherein the device (1) is preferably adapted for bringing the pin end section (30b) in the operational position by a relative displacement between the cylinder knife (20) and the in end section (30b) in the direction of the cylinder axis (S₁).

11. Device (1) according to any one of the preceding claims,
wherein the pin end section (30b) has a central axis (S₂) for the pin end section and the cylinder knife (20) has a cylinder axis (S₁), wherein the device (1) furthermore comprises means for mutually rotating the central axis of the pin end section (30b) and the cylinder axis (S₁) between a starting position parallel, and in particular concentric with respect to each other and an intestinal clamping position, at an angle with respect to each other, wherein the pin end section (30b) is preferably movable toward and away from the cylinder knife (20).

12. Device according to claim 11, adapted for bringing the pin end section in the operational position by a relative displacement between the cylinder knife and the pin end section in the direction of the cylinder axis.

13. Method for removing the vent (200) of a carcass of slaughtered, poultry, wherein a centring pin (30) with a with a pin end section (30b) having a rigid, solid clamping surface and widened end (53) is introduced through the vent opening, a cylinder knife with an end edge transects the vent area, **characterized in that** by mutual movement toward each other of the cylinder knife (20) and the pin end section (30b) of the centering pin (30) that extends into the intestinal, (203), which, mutual movement takes place in a direction substantially transverse to the longitudinal direction of the centering pin (30) and/or the cylinder knife (20) the intestinal (203) is locally clamped inside the cylinder knife (20), after which the cylinder knife (20) and the centering pin (30) are moved away from the carcass to bring the vent area and connected intestinal (203) outside the carcass.

14. Method according to claim 13, wherein the pin end section (30b) is moved for clamping the intestinal, wherein the pin end section (30b) is preferably placed inclined.

## Patentansprüche

1. Vorrichtung (1) zum Ausschneiden und zur Entfernung der Kloake (200) eines Rumpfes von geschlachtetem Geflügel, umfassend einen Halter (7) für den Rumpf und eine Einrichtung (9), welche in Richtung auf den Rumpf hin und von ihm weg bewegbar ist, mit einem rotierend angetriebenen Zylindermesser (20) mit einer Schnittkante (21) und einer zylindrischen Innenfläche und einem sich innerhalb des Zylindermessers (20) erstreckenden Stift (30) mit einem Stiftkörper (30a), der mit einem Stiftendabschnitt (30b) mit einem Endabschnitt (53) versehen ist, wobei der Endabschnitt (53) zum Durchgang durch die Kloake (200) und zum Eingriff hinter dem Orbicular- bzw. Ringmuskel (201) bestimmt ist, wobei der Stiftendabschnitt (30b) eine starre, feste Klemmfläche aufweist, **dadurch gekennzeichnet, dass** die Vorrichtung (1) weiterhin mit Mitteln zur hinund herschwingenden Bewegung des Stiftendabschnitts (30b) in Richtung auf das Zylindermesser (20), im Wesentlichen quer zu der zylindrischen Innenfläche, und **dadurch** zur Bewegung eines Abschnitts der Innenfläche des Zylindermessers und eines Abschnitts der Klemmfläche innerhalb des Zylindermessers (20) gegeneinander zur lokalen Klemmung eines Darmabschnitts (203) dazwischen versehen ist.

2. Vorrichtung (1) nach Anspruch 1, wobei der Stiftendabschnitt (30b) in Richtung auf das Zylindermesser (20) und von diesem weg bewegbar ist.

3. Vorrichtung (1) nach Anspruch 1 oder 2, welche zur Bewegung der Innenfläche des Zylindermessers (20) und der Klemmfläche gegeneinander durch eine relative Verstellung zwischen dem Zylindermesser (20) und dem Stiftendabschnitt (30b) zur Klemmung eines Darmabschnitts (203) dazwischen angepasst ist.

4. Vorrichtung (1) nach einem der vorhergehenden Ansprüche, wobei der Stiftkörper (30a) eine Mittelachse (S₁) aufweist und der Stiftendabschnitt (30b) in Bezug auf die Mittelachse (S₁) des Stiftkörpers (30a) zwischen einer Ausgangsposition in Reihe mit der Mittelachse (S₁) und einer Arbeitsposition in einem Winkel (H) zu dieser bewegbar ist.

5. Vorrichtung (1) nach Anspruch 4, wobei der Stiftendabschnitt (30b) in Richtung auf die Ausgangsposition federvorgespannt ist.

6. Vorrichtung (1) nach Anspruch 4 oder 5, wobei der Stiftendabschnitt (30b) mit dem übrigen Stiftkörper (30a) verschwenkbar verbunden ist, wobei vorzugsweise der Stiftendabschnitt (30b) an der Position einer Schwenkachse (52) an dem übrigen Stiftkörper (30a) schwenkbar verbunden ist, wobei die Schwenkachse (52) vorzugsweise exzentrisch in Bezug auf die Mittelachse (S₁) des Stiftkörpers (30a) angeordnet ist.

7. Vorrichtung (1) nach einem der Ansprüche 4 bis 6, versehen mit Mitteln (70) zum Drücken des Stiftendabschnitts (30b) in die Arbeitsposition und zum Halten in dieser, wobei die Vorrichtung (1) vorzugsweise dazu angepasst ist, den Stiftendabschnitt (30b) durch eine relative Verstellung zwischen dem Zylindermesser (20) und dem Stiftendabschnitt (30b) in die Richtung der Mittelachse des Zylindermessers (S₁) in die Arbeitsposition zu bringen, wobei vorzugsweise Mittel, wie beispielsweise ein Distanzgegenlagerring, zur Einstellung der Lage des Anfangs der Arbeitsbedingung der Schubmittel (70) vorgesehen sind, wobei die Vorrichtung vorzugsweise mit Mitteln zur Einstellung der Klemmkraft versehen ist.

8. Vorrichtung (1) nach Anspruch 7, wobei die Mittel (70) zum Drücken des Stiftendabschnitts (30b) in die Arbeitsposition ein von dem Zylindermesser (20) getragenes Antriebsglied aufweisen, welches zur direkten oder indirekten Ausübung einer Kraft auf den Stiftendabschnitt (30b), vorzugsweise einer Druckkraft, die den Stiftendabschnitt (30b) in Richtung auf die Arbeitsposition drückt, angeordnet ist, wobei der Stiftendabschnitt (30b) vorzugsweise mit einem Widerlager (50a) versehen ist, welches für einen direkten oder indirekten Eingriff durch das ersten Antriebsglied angeordnet ist, wobei vorzugsweise ein zweites Antriebsglied (70) auf dem Stiftkörper (30a) vorgesehen ist, welches längs des Stiftkörpers (30a) für eine kraftübertragende Verbindung zwischen dem ersten Antriebsglied und dem Widerlager (50a) bewegbar ist, wobei vorzugsweise das zweite Antriebsglied (70) eine Hülse bildet, die auf dem Stiftkörper (30a) in verschiebbarer Weise angebracht ist.

9. Vorrichtung (1) nach Anspruch 6 und 8, wobei das Widerlager (50a) auf einer Seite der Mittelachse des Stifts (S₁) gegenüber der Schwenkachse (52) in Betrieb ist.

10. Vorrichtung (1) nach einem der vorhergehenden Ansprüche, wobei das Zylindermesser (20) eine Zylinderachse (S₁) aufweist und der Stiftendabschnitt (30b) in Bezug auf die Zylinderachse (S₁) zwischen einer Ausgangsposition in Reihe mit der Zylinderachse (S₁) und einer Arbeitsposition in einem Winkel zu dieser bewegbar ist, wobei die Vorrichtung (1) vorzugsweise dazu angepasst ist, den Stiftendabschnitt (30b) durch eine relative Verstellung zwischen dem Zylindermesser (20) und dem Stiftendabschnitt (30b) in die Richtung der Zylinderachse (S₁) in die Arbeitsposition zu bringen.

11. Vorrichtung (1) nach einem der vorhergehenden Ansprüche, wobei der Stiftendabschnitt (30b) eine Mittelachse (S₂) für den Stiftendabschnitt aufweist und das Zylindermesser (20) eine Zylinderachse (S₁) aufweist, wobei die Vorrichtung (1) weiterhin Mittel zur wechselseitigen Rotation der Mittelachse des Stiftendabschnitts (30b) und der Zylinderachse (S₁) zwischen einer parallelen, und insbesondere einer in Bezug aufeinander konzentrischen, Ausgangsposition und einer intestinalen bzw. Darm-Klemmposition in einem Winkel in Bezug aufeinander, wobei der Stiftendabschnitt (30b) vorzugsweise in Richtung auf das Zylindermesser (20) und von diesem weg bewegbar ist.

12. Vorrichtung (1) nach Anspruch 11, welche dazu angepasst ist, den Stiftendabschnitt durch eine relative Verstellung zwischen dem Zylindermesser und dem Stiftendabschnitt in die Richtung der Zylinderachse in die Arbeitsposition zu bringen.

13. Verfahren zum Entfernen der Kloake (200) eines Rumpfes von geschlachtetem Geflügel, wobei ein Zentrierstift (30) mit einem Stiftendabschnitt (30b), der eine starre, feste Klemmfläche aufweist, und mit einem aufgeweiteten Ende (53) durch die Kloake eingeführt wird, ein Zylindermesser mit einer Endkante den Kloakenbereich durchschneidet, **dadurch gekennzeichnet, dass** durch eine wechselseitige Bewegung des Zylindermessers (20) und des Stiftendabschnitts (30b) des Zentrierstifts (30), der sich in den Darm (203) erstreckt, in Richtung aufeinander zu, wobei die wechselseitige Bewegung in einer Richtung im Wesentlichen quer zu der Längsrichtung des Zentrierstifts (30) und/oder des Zylindermessers (20) erfolgt, der Darm (203) lokal innerhalb des Zylindermessers (20) geklemmt wird, und danach das Zylindermesser (20) und der Zentrierstift (30) von dem Rumpf weg bewegt werden, um den Kloakenbereich und den damit verbundenen Darm (203) außerhalb des Rumpfes zu bringen.

14. Verfahren nach Anspruch 13, wobei der Stiftendabschnitt (30b) zum Klemmen des Darms bewegt wird, wobei der Stiftendabschnitt (30b) vorzugsweise geneigt angeordnet ist.

## Revendications

1. Dispositif (1) permettant de sectionner et de retirer le cloaque (200) d'une carcasse de volaille abattue, comprenant un support (7) pour la carcasse et un ensemble (9) qui est mobile en rapprochement et en éloignement de la carcasse, avec un couteau cylindrique (20) entraîné en rotation avec un bord tranchant (21) et une surface interne cylindrique et une tige (30) s'étendant à l'intérieur du couteau cylindrique (20), avec un corps de tige (30a) qui est doté d'une section d'extrémité de tige (30b) avec une section d'extrémité (53) qui est destinée à passer au travers de l'ouverture du cloaque (200) et à la mise en prise derrière le muscle orbiculaire (201), dans lequel la section d'extrémité de tige (30b) possède une surface de serrage rigide solide, **caractérisé en ce que** le dispositif (1) est en outre doté de moyens pour déplacer par basculement la section d'extrémité de tige (30b) vers le couteau cylindrique (20) et ainsi déplacer l'une vers l'autre, de manière sensiblement transversale à la surface interne cylindrique, une section de la surface interne du couteau cylindrique et une section de la surface de serrage à l'intérieur du couteau cylindrique (20) pour serrer localement une partie d'intestin (203) entre elles.

2. Dispositif (1) selon la revendication 1, dans lequel la section d'extrémité de tige (30b) est mobile en rapprochement et en éloignement du couteau cylindrique (20).

3. Dispositif (1) selon la revendication 1 ou 2, conçu pour déplacer l'une vers l'autre, par un déplacement relatif entre le couteau cylindrique (20) et la section d'extrémité de tige (30b), la surface interne du couteau cylindrique (20) et la surface de serrage pour serrer une partie d'intestin (203) entre elles.

4. Dispositif (1) selon l'une quelconque des revendications précédentes, dans lequel le corps de tige (30a) possède un axe central (S1) et la section d'extrémité de tige (30b) est mobile par rapport à l'axe central (S1) du corps de tige (30a) entre une position de départ alignée avec l'axe central (S1) et une position opérationnelle inclinée (4) par rapport à celui-ci.

5. Dispositif (1) selon la revendication 4, dans lequel la section d'extrémité de tige (30b) est amenée par ressort vers la position de départ.

6. Dispositif (1) selon la revendication 4 ou 5, dans lequel la section d'extrémité de tige (30b) est reliée de manière pivotante au reste du corps de tige (30a), dans lequel, de préférence, la section d'extrémité de tige (30b) à l'emplacement d'une ligne de rotation (52) est reliée de manière pivotante au reste du corps de tige (30a), dans lequel la ligne de rotation (52) est de préférence située de manière excentrique par rapport à l'axe central (S1) du corps de tige (30a).

7. Dispositif (1) selon l'une quelconque des revendications (4-6) doté de moyens (70) pour forcer la section d'extrémité de tige (30b) vers la position opérationnelle et la maintenir dans cette position, dans lequel le dispositif (1) est de préférence conçu pour amener la section d'extrémité de tige (30b) dans la position opérationnelle par un déplacement relatif entre le couteau cylindrique (20) et la section d'extrémité de tige (30b) dans la direction de l'axe central du couteau cylindrique (S1), dans lequel, de préférence, des moyens, tels qu'une rondelle d'écartement, ont été prévus pour ajuster l'emplacement du départ de la condition opérationnelle des moyens poussoirs (70), dans lequel, de préférence, le dispositif est doté de moyens pour ajuster la force de serrage.

8. Dispositif (1) selon la revendication 7, dans lequel les moyens (70) pour forcer la section d'extrémité de tige (30b) vers la position opérationnelle comprennent un premier élément actionneur, porté par le couteau cylindrique (20), qui est conçu pour exercer directement ou indirectement sur la section d'extrémité de tige (30b) une force qui force la section d'extrémité de tige (30b) vers la position opérationnelle, de préférence une force de poussée, dans lequel la section d'extrémité de tige (30b) a été de préférence dotée d'une butée (50a) qui est conçue pour être mise en prise directement ou indirectement par le premier élément actionneur, dans lequel, de préférence, sur le corps de tige (30a), se trouve un second élément actionneur (70), qui est mobile le long du corps de tige (30a) pour une liaison de transmission de force entre le premier élément actionneur et la butée (50a), dans lequel, de préférence, le second élément actionneur (70) forme un manchon qui est placé sur le corps de tige (30a) d'une manière coulissante.

9. Dispositif (1) selon les revendications 6 et 8, dans lequel la butée (50a) est opérationnelle sur un côté de l'axe central de tige (S1) opposé à la ligne de rotation (52).

10. Dispositif (1) selon l'une quelconque des revendications précédente, dans lequel le couteau cylindrique (20) possède un axe cylindrique (S1) et la section d'extrémité de tige (30b) est mobile par rapport à l'axe cylindrique (S1) entre une position de départ alignée avec l'axe cylindrique (S1) et une position opérationnelle inclinée par rapport à celui-ci, dans lequel le dispositif (1) est conçu de préférence pour amener la section d'extrémité de tige (30b) dans la position opérationnelle grâce à un déplacement relatif entre le couteau cylindrique (20) et la section d'extrémité de tige (30b) dans la direction de l'axe cylindrique (S1).

11. Dispositif (1) selon l'une quelconque des revendications précédentes, dans lequel la section d'extrémité de tige (30b) possède un axe central (52) pour la section d'extrémité de tige et le couteau cylindrique (20) possède un axe de cylindre (S1), dans lequel le dispositif (1) comprend en outre des moyens pour faire tourner mutuellement l'axe central de la section d'extrémité de tige (30b) et l'axe de cylindre (S1) entre une position de départ parallèles et en particulier, de manière concentrique l'un par rapport à l'autre, et une position de serrage d'intestin, inclinés l'un par rapport à l'autre, dans lequel la section d'extrémité de tige (30b) est de préférence mobile en rapprochement et en éloignement du couteau cylindrique (20).

12. Dispositif selon la revendication 11, conçu pour amener la section d'extrémité de tige dans la position opérationnelle par un déplacement relatif entre le couteau cylindrique et la section d'extrémité de tige dans la direction de l'axe cylindrique.

13. Procédé pour retirer le cloaque (200) d'une carcasse de volaille abattue, dans lequel une tige de centrage (30) avec une section d'extrémité de tige (30b) ayant une surface de serrage rigide solide et avec une extrémité élargie (53) est introduite par l'ouverture du cloaque, un couteau cylindrique avec un bord d'extrémité sectionne transversalement la zone du cloaque, **caractérisé en ce que** par un mouvement mutuel l'un vers l'autre du couteau cylindrique (20) et de la section d'extrémité de tige (30b) de la tige de centrage (30) qui s'étend dans l'intestin (203), lequel mouvement mutuel a lieu dans une direction sensiblement transversale à la direction longitudinale de la tige de centrage (30) et/ou du couteau cylindrique (20), l'intestin (203) est localement serré à l'intérieur du couteau cylindrique (20), après quoi le couteau cylindrique (20) et la tige de centrage (30) sont éloignés de la carcasse pour amener la zone du cloaque et l'intestin attaché (203) à l'extérieur de la carcasse.

14. Procédé selon la revendication 13, dans lequel la section d'extrémité de tige (30b) est déplacée pour serrer l'intestin, dans lequel la section d'extrémité de tige (30b) est placée de préférence de manière inclinée.
